(19) Europäisches Patentamt
European Patent Office
Office européen des brevets

(11) **EP 1 796 295 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(51) Int Cl.:
*H04B 10/08* (2006.01)    *G01J 4/00* (2006.01)
*G01M 11/00* (2006.01)

(21) Anmeldenummer: **05026788.9**

(22) Anmeldetag: **08.12.2005**

(54) **Verfahren zur Detektion und Ortung von Störungen auf einer optischen Übertragungsstrecke und optisches Übertragungssystem**

Method for detection and location of faults on an optical transmission path and optical transmission system

Procédé destiné à la détection et à la localisation de perturbations sur un trajet de transmission optique et un système de transmission optique

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**13.06.2007 Patentblatt 2007/24**

(73) Patentinhaber: **Deutsche Telekom AG**
**53113 Bonn (DE)**

(72) Erfinder:
• **Leppla, Ralph, Dr.**
**64285 Darmstadt (DE)**
• **Schneiders, Malte, Dipl.-Ing.**
**64289 Darmstadt (DE)**
• **Vorbeck, Sascha, Dipl.-Ing.**
**64347 Griesheim (DE)**
• **Weiershausen, Werner, Dipl.-Ing.**
**64859 Eppertshausen (DE)**
• **Rumpf, Frank, Dipl.-Ing.**
**64283 Darmstadt (DE)**
• **Gunkel, Matthias, Dr.**
**64291 Darmstadt (DE)**

(56) Entgegenhaltungen:
CA-A1- 2 229 219       US-A- 5 381 257
US-A- 5 485 296        US-A1- 2003 086 144
US-A1- 2005 002 017

• JOACHIM WUTTKE ET AL: "Polarization Oscillations in Aerial Fiber Caused by Wind and Power-Line Current" IEEE PHOTONICS TECHNOLOGY LETTERS, IEEE SERVICE CENTER, PISCATAWAY, NJ, US, Bd. 15, Nr. 6, Juni 2003 (2003-06), XP011067737 ISSN: 1041-1135

**Beschreibung**

Gebiet der Erfindung.

Die Erfindung betrifft ein Verfahren zur Detektion und Ortung von Störungen auf einer optischen Übertragungsstrecke und ein optisches Übertragungssystem mit derartiger Funktionalität.

Hintergrund der Erfindung

Optische Datenübertragung, insbesondere über lange Strecken hat in den letzten Jahrzehnten enorm an Wichtigkeit gewonnen.

Dabei bilden langreichweitige sogenannte Wavelength-Division-Multiplex-Systeme (WDM) mit optischen Verstärkern die Grundlage für hochkapazitive Übertragungsnetze, sogenannte Backbone-Netze im Fernbereich. Bei einem WDM-System wird gleichzeitig eine Vielzahl von Trägersignalen mit unterschiedlichen Wellenlängen über dieselbe optische Faser übertragen. Typische optisch transparent überbrückbare Entfernungen liegen dabei im Bereich von 200 km bis 2000 km. Zur Heranführung der Daten an die Backbone-Netze werden ebenfalls glasfaserbasierte optische Übertragungssysteme eingesetzt, die zum Teil auch auf WDM-Technik beruhen, aber sonst meist nur einen optischen Kanal pro Glasfaser übertragen. Verbindungsnetz und Zuführung zusammen beruhen auf einer eng vermaschten Glasfaserinfrastruktur mit. typischen "Radien der Netzmaschen" von 2 bis 7 km.

Die Glasfasern können hierbei unterirdisch, d.h. in der Erde, oberirdisch, z.B. über Brücken, auf dem Grund von Gewässern, insbesondere transozean oder freischwebend verlegt sein.

Ein wesentliches Problem besonders bei einer unterirdisch installierten Glasfaserinfrastruktur sind Zerstörungen der Glasfaserkabel durch äußere Einflüsse. Eine Hauptursache für derartige Zerstörungen sind Bauarbeiten. Aber auch bei Unterseekabeln können mechanische Einwirkungen auftreten, die potenziell zerstörenden Einfluss auf das Kabel haben.

Es ist bekannt, Fehler in einer Faser mittels der sogenannten optical time domain reflectrometry (OTDR) zu ermitteln. Hierbei wird ein Signal in die Faser gesendet und dessen Reflektionen gemessen. Nachteilig bei diesem Verfahren ist seine geringe Empfindlichkeit. Insbesondere können Störungen erst dann erkannt werden, wenn die Faser bereit signifikant geschädigt ist. Darüber hinaus können mit der OTDR lediglich kurze Abschnitte einer Übertragungsstrecke bis typischer Weise etwa maximal 50 km überprüft werden, da aufgrund der Reflektionsmessung lediglich abschnittsweise zwischen den Verstärkern gearbeitet werden kann.

Das US-Patent 5,485,296 A (Healey et al.) beschreibt eine Überwachungseinheit zum Detektieren von Fluktuationen des Polarisationszustandes, um externe Einflüsse festzustellen. Hierzu wird ein Teilsignal aus dem optischen Wellenleiter ausgekoppelt und dessen Polarisationszustand mittels eines Überwachungskreises untersucht. Die Auskopplung eines Teilsignals erfolgt innerhalb der Übertragungsstrecke mittels eines gekrümmten Wellenleiters an dem Leckstrahlung in eine parallele Faser übertritt. Der Überwachungskreis enthält eine "Lowspeed"-Diode und betätigt einen Summer bei Überschreitung eines Schwellenwertes. Eine Analyse der Zeitfunktion mit einer zeitlichen Auflösung, wird nicht durchgeführt.

Joachim Wuttke et al. beschreiben in "Polarization Oscillations in Aerial Fiber Caused by Wind and Power-Line Current", IEEE PHOTONICS TECHNOLOGY LETTERS, Vol. 15, 06, Juni 2003 die Messung von schnellen Polarisationsfluktuationen, welche durch Wind verursacht werden, auf einer langen optischen Faser. Hierzu wurde eine Testmessung an einer 2 x 90 km langen optischen Faser im Blitzschutzkabel einer Hochspannungsleitung durchgeführt und das Spektrum der Polarisationsfluktuationen im Bereich bis zu einigen kHz untersucht sowie Fourier-transformiert.

Die Druckschrift CA 2 229 219 A1 betrifft ein Gerät zur Messung der Polarisationsmodendispersion. Zwar werden die Stokes-Parameter berechnet und das Gerät als geeignet für optische Fasern in Telekommunikationssystemen bezeichnet, jedoch geht es nicht um die Bestimmung von externen Einflüssen oder Störungen auf eine Übertragungsfaser.

Eine Ortung von Einflüssen oder Störungen auf der Übertragungsstrecke ist aus den vorstehend genannten Druckschriften nicht bekannt.

Allgemeine Beschreibung der Erfindung

Es ist daher eine Aufgabe der Erfindung ein Verfahren und ein Übertragungssystem bereitzustellen, welches in der Lage ist, Einflüsse oder Störungen auf die Übertragungsstrecke zu detektieren und zu orten, insbesondere bevor sie eine zerstörerische Wirkung auf die optische Faser haben.

Noch eine Aufgabe der Erfindung ist es, ein einfaches kostengünstiges und empfindliches derartiges Verfahren bereit zu stellen sowie Mittel, mit denen vorhandene bereits installierte Übertragungssysteme entsprechend nachgerüstet werden können.

Die Aufgabe der Erfindung wird in überraschend einfacher Weise bereits durch den Gegenstand der unabhängigen Ansprüche gelöst. Vorteilhafte Weiterbildungen der Erfindung sind in den Unteransprüchen definiert.

Erfindungsgemäß werden Störungen, insbesondere externe mechanisch Einflüsse auf eine Übertragungsstrecke eines langreichweitigen optischen Übertragungssystems wie folgt detektiert:

Es wird zumindest teilweise polarisiertes Licht mit einem Eingangs-Polarisationszustand an einer ersten Stelle der Übertragungsstrecke in die Übertragungsstrecke eingekoppelt.

Das Licht wird an einer zweiten Stelle der Übertragungsstrecke aus dieser wieder ausgekoppelt, wobei die erste und zweite Stelle räumlich voneinander entfernt gelegen sind, so dass das an der zweiten Stelle ausgekoppelte Licht zumindest einen Teil der Übertragungsstrecke durchlaufen hat, um die Störungen auf dem durchlaufenen Teil zu detektieren.

An der zweiten Stelle wird der Polarisationszustand des ausgekoppelten Lichts zeitaufgelöst gemessen und die zeitliche Änderung des Polarisationszustands des ausgekoppelten Lichts wird ermittelt.

Mittels einer Auswerteeinrichtung wird, dem durchlaufenen Teil zu detektieren.

An der zweiten Stelle wird der Polarisationszustand des ausgekoppelten Lichts zeitaufgelöst gemessen und die zeitliche Änderung des Polarisationszustands des ausgekoppelten Lichts wird ermittelt.

Mittels einer Auswerteeinrichtung wird, insbesondere automatisiert, eine externe Einwirkung auf die optische Faser in Ansprechen auf die zeitliche Änderung des gemessenen Polarisationszustands des ausgekoppelten Lichts detektiert.

In vorteilhafter Weise können hiermit zeitaufgelöst Störungen detektiert werden, noch während das Übertragungssystem optisch transparent ist, d.h. bevor das Kabel oder die Faser durchtrennt ist.

Weiter vorteilhaft ist, dass die Polarisationsmessung bereits auf kleine Einwirkungen reagiert und so z.B. leichte Vibrationen, wie z.B. durch (Tief-)Bauarbeiten in einem frühen Stadium nachgewiesen werden können. Aber nicht nur mechanische Einflüsse, sondern auch Temperaturveränderungen entlang der Strecke führen zu Änderungen des Polarisationszustandes am Ausgang der Übertragungsstrecke. Zusätzlich führt eine Bewegung des Kabels z.B. durch Wellengang zu messbaren, aber langsamen Polarisationsänderungen. Für freihängend installierte Glasfaserkabel können auch geringe Einflüsse von außen wie Wind zu großen Polarisationsänderungen führen. Auch diese Veränderungen sind mit dem Verfahren grundsätzlich detektierbar und erkennbar. Der Polarisationszustand (SOP: state of polarisation) am Ausgang eines optischen Übertragungsweges reagiert nämlich sehr empfindlich auf Einwirkungen auf die Glasfaser entlang der optischen Strecke. Die hohe Sensitivität der Glasfaser gegenüber Störungen entsteht durch den Modenkopplungseffekt zwischen den unterschiedlichen Polarisationsrichtungen. Durch die Phasensensitivität der Interferenz bei der Modenkopplung stellt eine Glasfaser demnach ein Multi-Interferometer dar. Bei konstanter Eingangspolarisation des Übertragungssystems kann die Veränderung der Ausgangspolarisation durch die Veränderung der Übertragungsmatrix im Sinne einer zweidimensionalen frequenzabhängigen Übertragungsfunktion beschrieben werden.

Ein weiterer Vorteil ist es, dass das Verfahren über sehr lange Übertragungsstrecken, insbesondere durch die in der Übertragungstrecke befindlichen Verstärker durchgeführt werden kann.

Bevorzugt wird der Polarisationszustand des ausgekoppelten Lichts kontinuierlich gemessen und vorbestimmte Parameter, welche ein Maß für den Polarisationszustand sind, werden als Funktion der Zeit ermittelt. In vorteilhafter Weise wird somit eine Dauerüberwachung der Übertragungsstrecke und ggf. eine Aufzeichnung der Ereignisse ermöglicht. Der zeitliche Verlauf der Polarisationszustandsfunktion erlaubt Rückschlüsse auf die Art der Störung.

Es hat sich als besonders zweckmäßig erwiesen, die Stokes-Parameter des Polarisationszustands des ausgekoppelten Lichts zu ermitteln, um eine allgemein übliche vollständige Darstellung der elliptischen Polarisation des Lichts zu erhalten.

Die Erfinder haben weiter herausgefunden, dass es vorteilhaft ist, eine Fourier-Analyse der Stokes-Parameter durchzuführen, um die enthaltenen Frequenzanteile zu ermitteln und dann eine Filterung nach vorbestimmten Frequenzanteilen durchzuführen. Vorteilhaft können nämlich im Fourierspektrum periodische oder langsame Störungen, wie z.B. Wind- oder Wellenbewegungen bei freitragenden bzw. unterseeisch verlegten Kabeln herausgefiltert werden. D.h. in bestimmten Fällen läßt sich anhand der Frequenz der Störung bereits ihre Ursache ermitteln. Auch temperaturbedingte Einflüsse lassen sich von mechanisch bedingten Polarisationsänderungen aufgrund der unterschiedlichen Zeitkonstanten trennen. So führt die Wärmekapazität des Übertragungsmediums (Glasfaser plus Kabel) nämlich dazu, dass temperaturbedingte Polarisationsänderungen sehr langsam ablaufen.

Es kann jedoch auch genügen, lediglich die Amplituden der Stokes-Parameter zu messen, da bereits diese ein Maß für die Intensität der Störung sind. Diese Auswertung ist sehr einfach zu realisieren.

Ein besonders bevorzugtes Einsatzgebiet der Erfindung ist in einem WDM-System.

Gemäß einer bevorzugten Auführungsform der Erfindung werden die zur Nachrichtenübertragung verwendeten optischen Signale als das Licht zur Messung des Polarisationszustands verwendet, da die optischen Signale in Form von polarisiertem Licht übertragen werden. Hierfür wird ein Teil der Leistung der zur Nachrichtenübertragung verwendeten also ohnehin vorhandenen optischen Signale an der zweiten Stelle ausgekoppelt und somit der Polarisationszustand der optischen Signale nach dem Durchlaufen des zumindest einen Teils der Übertragungsstrecke oder der Messstrecke gemessen. In diesem Fall repräsentierten die zur Nachrichtenübertragung verwendeten optischen Signale das eingekoppelte Licht. Vorteilhaft ist bei dieser Ausführungsform keine separate Lichtquelle notwendig, sondern es wird lediglich ein kleiner Teil von bevorzugt weniger als 10%, besonders bevorzugt etwa 1% des Datensignals ausgekoppelt.

Es ist allerdings ebenfalls vorteilhaft, das Licht zur Durchführung der Polarisationsmessung oder das Polarisationsmesslicht mittels eines separaten Lasers, bevorzugt im Dauerlichtbetrieb, an der ersten Stelle zusätzlich zu den optischen Signalen einzukoppeln. Dies hat den Vorteil, dass die volle Leistung des Lasers wieder ausgekoppelt werden und zur Messung verwendet werden kann, so dass vorteilhaft eine hohe Lichtleistung nach dem Auskoppeln für die Polarisationsmessung zur Verfügung steht. Die Wellenlänge des Lasers liegt dabei vorzugsweise im Verstärkerband des Übertragungssystems, so dass die Messung über sehr große Strecken bis einige tausend km durchgeführt werden kann.

Auch bei einem WDM-System kann das Polarisationsmesslicht oder Messsignal an jeder beliebigen Stelle innerhalb der Übertragungsstrecke, insbesondere auch zwischen Multiplexer und Demultiplexer ein- bzw. ausgekoppelt werden. In diesem Fall wird hinter den Koppler ein optisches Filter geschaltet. Eine besonders vorteilhafte Stelle zum Ein- und Auskoppeln ist jeweils der Ort eines optischen Verstärkers innerhalb der Übertragungsstrecke.

Bei einem WDM-System ist es jedoch besonders einfach, das Polarisationsmesslicht direkt am Multiplexer einzukoppeln und/oder direkt am Demultiplexer wieder auszukoppeln. Auf diese Weise kann auf separate Filter verzichtet werden. Das Licht zur Messung des Polarisationszustands wird einfach mittels eines optischen Kopplers direkt am Eingang des Multiplexers eingekoppelt und mittels eines weiteren optischen Kopplers direkt am Ausgang des Demultiplexers ausgekoppelt.

Zur zeitaufgelösten Messung des Polarisationszustandes (SOP) wird gemäß einem einfachen Ausführungsbeispiel der Erfindung ein Polarisator, dem eine Photodiode nachgeschaltet ist verwendet. Die Photodiode kann mit Hilfe eines Oszilloskops betrieben werden. Als besonders zweckmäßig hat sich jedoch der Einsatz eines sogenannten Polarimeters erwiesen, welches alle Komponenten der Polarisation z.B. in Ihrer Stokes-Darstellung misst. Derartige Polarimeter mit hoher zeitlicher Auflösung sind auf dem Markt erhältlich. Aus der Auswertung der zeitlichen Änderung der Polarisation, z.B. der Stokes-Parameter, oder in der einfachen Realisierungsvariante der gemessenen Leistung an der Photodiode hinter dem Polarisator, lassen sich die Änderungen des Polarisationszustandes berechnen.

Die Erfindung erweist ihre besonderen Vorzüge, wenn das Übertragungssystem mehrere Übertragungsstrecken umfasst. In diesem Fall wird das erfindungsgemäße Verfahren bevorzugt an allen Übertragungsstrecken angewandt. Dabei wird jeweils mit einem separaten Polarimeter aus jeder der Übertragungsstrecken Polarisationsmesslicht ausgekoppelt und der Polarisationszustand des jeweiligen Polarisationsmesslichts zeitaufgelöst gemessen. Sind die Polarimeter mittels einer gemeinsamen Taktversorgung synchronisiert kann eine zeitliche Korrelation zwischen den Polarisationszuständen an den Polarimetern ermittelt werden, was Rückschlüsse auf die räumliche Ausdehnung und die Art der Störung gestattet.

Mit der Erfindung lassen sich Störungen jedoch nicht nur detektieren, sondern sogar räumlich orten. Ist nämlich das Übertragungssystem bidirektional ausgebildet, werden die Polarisationszustände vorzugsweise an beiden Seiten des Übertragungssystems, d.h. einmal für die Hinrichtung und einmal für die Rückrichtung, vorzugsweise mit je einem Polarimeter zeitaufgelöst gemessen. Ferner werden die beiden Polarimeter zeitlich synchronisiert und in Ansprechen auf die relative Ankunftszeit, insbesondere die Zeitdifferenz einer identifizierbaren schnellen Änderung des Polarisationszustands an den beiden Seiten der Messstrecke wird der Ort der externen Einwirkung entlang des Übertragungswegs berechnet. Neben der Zeitdifferenz ist lediglich die Kenntnis der Gesamtlänge der Messstrecke und der Übertragungsgeschwindigkeit der optischen Faser erforderlich.

Zur Synchronisierung der beiden Polarimeter an den beiden Enden wird vorzugsweise der Normaltakt des Übertragungssystems, ein GPS-Signal oder ein Radiosignal verwendet.

Das Anwendungsgebiet des erfindungsgemäßen Verfahrens wird wesentlich durch die Sensitivität der Glasfaser, bzw. des Glasfaserkabels gegen äußere Störungen bestimmt. Im wesentlichen befinden sich folgende sensitiven Elemente in der Übertragungsstrecke:

hohle Wärmekapazität führt zur Glättung von schnellen Temperaturänderungen. Ein mechanischer Schutz gegen äußere Einflüsse verringert die Übertragung von mechanischen Einflüssen auf das Bauelement. Daher eignen sich unterirdisch verlegte Glasfaserkabel in Verbindung mit mechanisch zuverlässig geschützten Bauelementen gut für das erfindungsgemäße Verfahren.

Zur Messung der direkten Störungen auf der Übertragungsstrecke außerhalb von Gebäuden oder Schutzkästen, welche das Übertragungssystem durchläuft, beeinflusst das Design des Glasfaserkabels die Sensitivität des Systems für die Störungen. Bei unterirdisch verlegten Kabeln bestimmt ferner die mechanische Kopplung zwischen Kabelummantelung und Glasfaser die Sensitivität des Systems. Daher sind Systeme mit einer kraftschlüssigen Verbindung zwischen Glasfaser und Kabelummantelung und die derzeit verwendeten sogenannten "loose tubes" unterschiedlich empfindlich.

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

Kurzbeschreibung der Figuren

Es zeigen:

Fig. 1 Eine schematische Darstellung eines Übertragungssystems mit einem Polarimeter am Standort des Empfangsterminals unter Verwendung des Datensignals als Messsignal,

Fig. 2 eine schematische Darstellung eines Übertragungssystems mit zwei Polarimetern am Standort von optischen Verstärkern,

Fig. 3 eine schematische Darstellung eines Übertragungssystems mit einem cw-Laser zur Erzeugung und Einkopplung des Polarisationsmesslichts,

Fig. 4 ein Beispiel-Ergebnis einer zeitlich aufgelösten Messung der Stokes-Parameter am Ausgang einer Glasfaser zur Detektion einer auf das Übertragungssystem induzierten Störung,

Fig. 5 eine schematische Darstellung eines Knotens mit Knotengrad größer als 2 und

Fig. 6 eine schematische Darstellung eines bidirektionalen Übertragungssystems, welches zur Ortung von Störungen ausgebildet ist.

Detaillierte Beschreibung der Erfindung

**1. Detektion von Störungen**

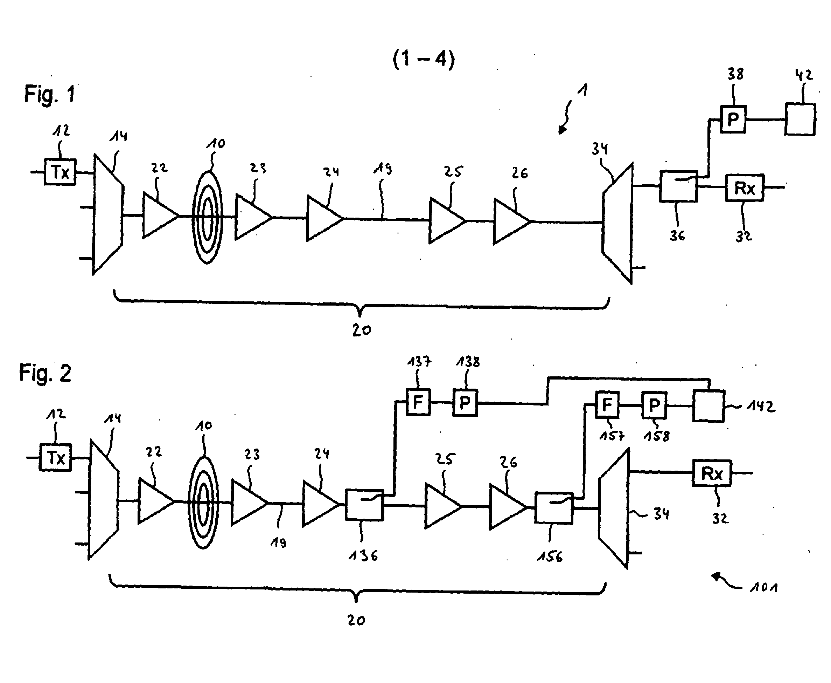

Fig. 1 zeigt ein Beispiel eines Übertragungssystems 1 mit der erfindungsgemäßen Funktionalität. Die Datensignale werden mit einer Vielzahl von Sendern, von denen lediglich ein Sender 12 dargestellt ist, mittels eines Multiplexers 14 gemultiplext und über die Faser 19 bzw. die Übertragungsstrecke 20 gesendet. Die Übertragungsstrecke 20 kann hierbei bis zu einigen Hundert oder sogar einigen Tausend Kilometer lang sein. Das Datensignal wird in vorbestimmten Abständen mittels Verstärkern 22 bis 26 in der Übertragungsstrecke 20 nachverstärkt. Typischerweise

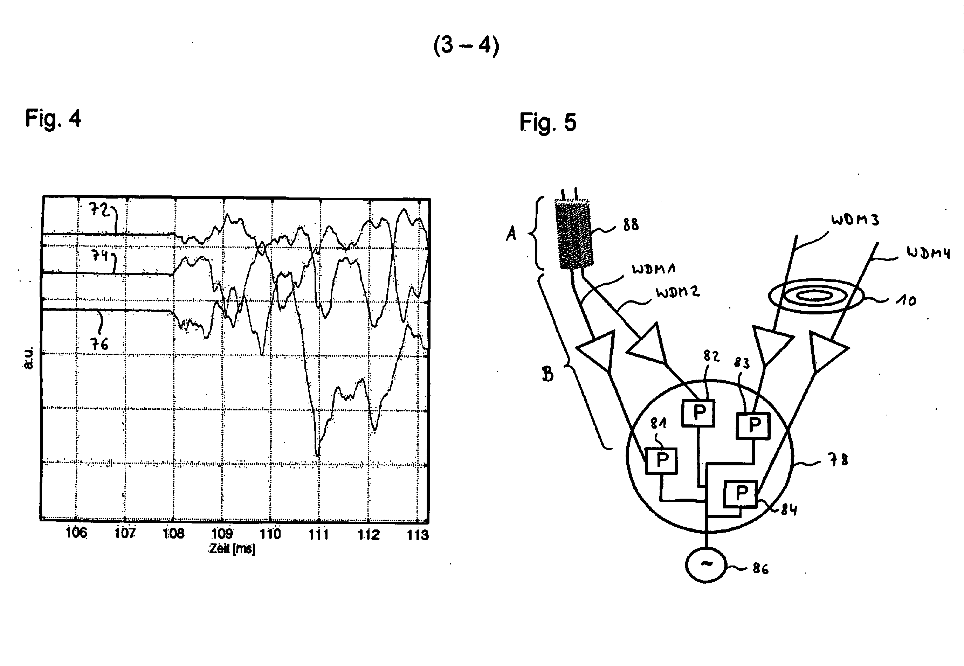

Fig. 4 ein Beispiel-Ergebnis einer zeitlich aufgelösten Messung der Stokes-Parameter am Ausgang einer Glasfaser zur Detektion einer auf das Übertragungssystem induzierten Störung,

Fig. 5 eine schematische Darstellung eines Knotens mit Knotengrad größer als 2 und

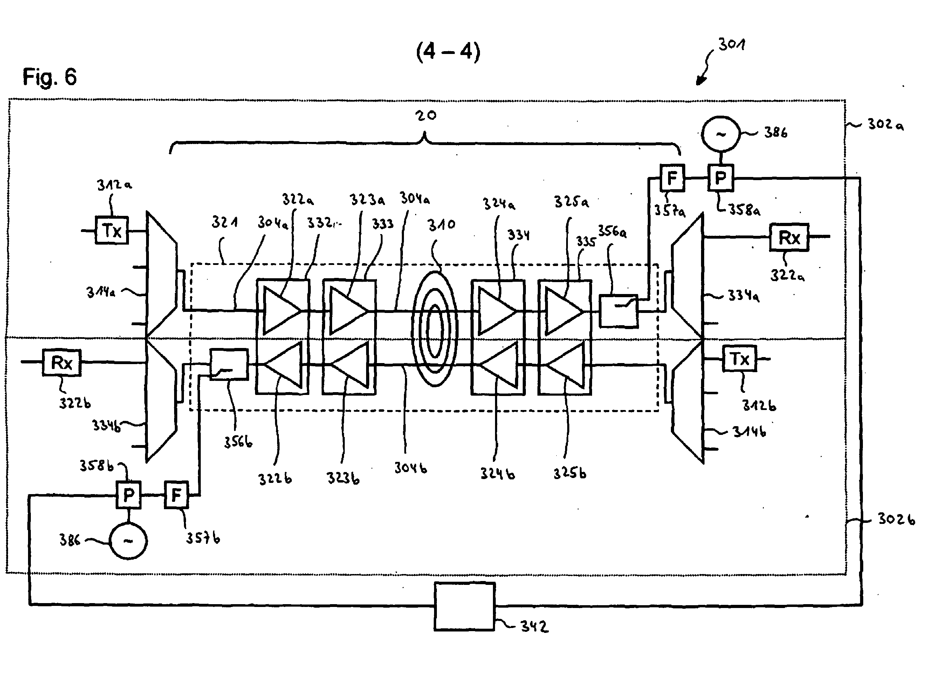

Fig. 6 eine schematische Darstellung eines bidirektionalen Übertragungssystems gemäß einer vierten Ausführungsform der Erfindung, welches zur Ortung von Störungen ausgebildet ist.

Detaillierte Beschreibung der Erfindung

**1. Detektion von Störungen**

Fig. 1 zeigt ein Beispiel eines Übertragungssystems 1 mit der erfindungsgemäßen Funktionalität. Die Datensignale werden mit einer Vielzahl von Sendern, von denen lediglich ein Sender 12 dargestellt ist, mittels eines Multiplexers 14 gemultiplext und über die Faser 19 bzw. die Übertragungsstrecke 20 gesendet. Die Übertragungsstrecke 20 kann hierbei bis zu einigen Hundert oder sogar einigen Tausend Kilometer lang sein. Das Datensignal wird in vorbestimmten Abständen mittels Verstärkern 22 bis 26 in der Übertragungsstrecke 20 nachverstärkt. Typischerweise beträgt der Abstand zwischen den Verstärkern in der Größenordnung von 50 km. Daher ist ersichtlich, dss die dargestellte Anzahl der Verstärker beispielhaft zu verstehen ist. Am Ende der Übertragungsstrecke 20 werden die gebündelten Signale mittels eines Demultiplexers 34 wieder gedemultiplext und von Empfängern, von denen wiederum lediglich ein Empfänger 32 dargestellt ist, empfangen.

In diesem ersten Ausführungsbeispiel wird ein Bruchteil der zur Nachrichtenübertragung verwendeten Signale mittels eines optischen Kopplers 36 unmittelbar am Ausgang des Demultiplexers 34 vor dem Empfänger 32 ausgekoppelt und einem Polarimeter 38 zugeführt.

Für die Versuche wurde ein handelsübliches Polarimeter des Typs A1000 der Firma Adaptif Photonics verwendet. Dieses weist eine hinreichende Zeitauflösung für die Messungen auf. Versuche haben gezeigt, dass ein Eingangssignal von etwa -30 dBm für das Polarimeter 38 ausreichend ist. Dies entspricht etwa 1 % des Datensignals. Mittels einer computergestützten Auswerteeinrichtung 42, welche mit dem Polarimeter 38 verbunden ist, wird die weitere Analyse der Zeitfunktion des Polarisationszustandes durchgeführt.

Bei diesem Beispiel verkörpert also das vom Sender 12 in das Übertragungssystem 1 bzw. die Übertragungsstrecke 20 eingekoppelte, zur Nachrichtenübertragung verwendete Datensignal, welches auf polarisiertem Licht basiert, das zur Polarisationsmessung verwendete, eingekoppelte Licht. D.h. es wird ein Teils der ohnehin zur Nachrichtenübertragung verwendeten Signale zur Auskopplung und Messung der Polarisation am Demultiplexer 34 verwendet.

Die Messung der Polarisation kann bei installierten WDM-Systemen aber prinzipiell an jeder Stelle der Übertragungsstrecke geschehen. Im Folgenden werden noch weitere Beispiele erläutert.

Fig. 2 zeigt ein weiteres Ausführungsbeispiel des erfindungsgemäßen Übertragungssystems 101, bei welchem das Polarisationsmesssignal nicht hinter dem Demultiplexer 34, sondern an zwei Stellen innerhalb der Übertragungsstrecke 20 zwischen dem Multiplexer 14 und dem Demultiplexer 34 aus der Faser 19 ausgekoppelt wird. Hierzu sind jeweils optische Koppler 136, 156 in die Übertragungsstrecke zur Auskopplung des Polarisationsmesssignals am Ort der Verstärker 24 und 26 eingebaut. Das ausgekoppelte Signal wird jeweils von einem optischen Filter 137, 157 gefiltert, um das Signal eines bestimmten Senders, in diesem Beispiel des Senders 12, auszufiltern. Die Filter 137, 157 sind jeweils mit Polarimetern 138, 158 verbunden, welche den Polarisationszustand des Polarisationsmesslichtes an eine gemeinsame Auswerteeinrichtung 142 übermitteln.

Somit kann bei diesem Ausführungsbeispiel aufgrund der Polarisationsmessung an den zwei unterschiedlichen Positionen der Verstärker 24 und 26 in der Übertragungsstrecke bereits bestimmt werden, ob eine Störung 10 zwischen dem Sender 12 und dem Verstärker 24 (dargestellter Fall) oder dem Verstärker 24 und dem Verstärker 26 (nicht dargestellt) aufgetreten ist.

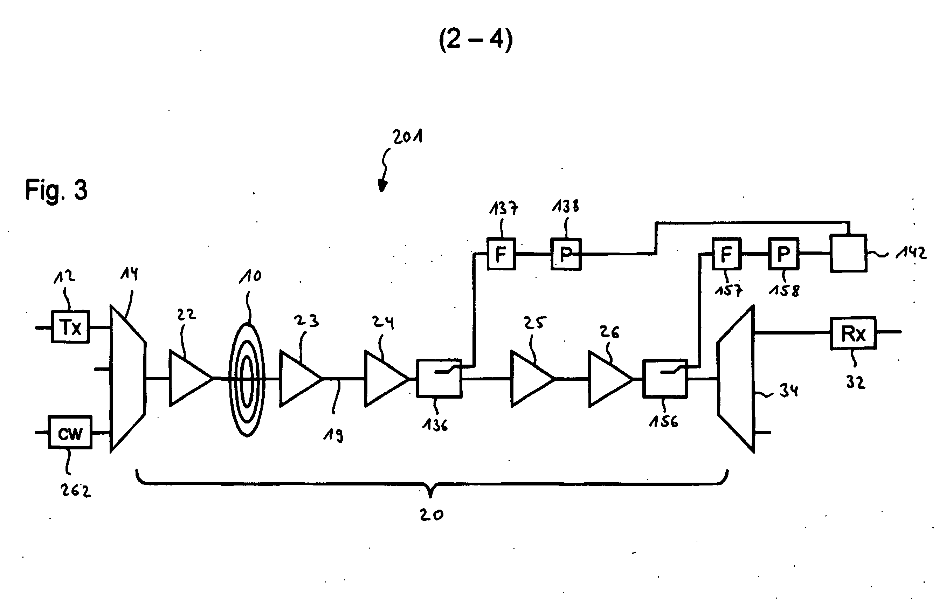

Fig. 3 zeigt ein weiteres Ausführungsbeispiel des erfindungsgemäßen Übertragungssystems 201, bei welchem anstatt des zur Nachrichtenübertragung verwendeten optischen Datensignals ein separater, nicht modulierter, im Dauerlichtbetrieb (sog. Continous-Wave-Betrieb oder cw-Betrieb) laufender Laser 262 verwendet wird. Die Wellenlänge des Lasers 262 liegt im Verstärkerband der Verstärker 22 bis 26. Die Auskopplung des Polarisationsmesssignals erfolgt entsprechend dem Ausführungsbeispiel in Fig. 2, wobei die Filterfrequenz der Filter 137, 157 hier an die Laserfrequenz angepasst ist.

Fig. 4 zeigt ein Beispiel des von den in Fig. 1 bis 3 dargestellten Polarimetern ausgegebenen Messsignals. Dargestellt sind drei Stokes-Parameter 72, 74 und 76 in willkürlichen Intensitätseinheiten (Y-Achse) als Funktion der Zeit (X-Achse). Ab dem Wert 108ms auf der X-Achse ist in allen drei Stokes-Parametern 72, 74, 76 eine schnelle zeitliche Veränderung zu erkennen. Diese resultiert aus einer auf das Übertragungssystem induzierten Störung 10, welche mittels der Stokes-Parameter-Funktionen detektiert werden kann.

Zur detaillierten Auswertung und Typisierung der Art der Polarisationsänderungen können die zeitlichen Polarisationsänderungen, in diesem Beispiel in Form der Stokes-Parameter 72, 74, 76, mit Verfahren der Signalanalyse ausgewertet werden. Mögliche Verfahren sind z. B.:

- die nachfolgende Fourier-Analyse der Stokes-Parameter und Filterung der enthaltenen Frequenzanteile, wodurch z.B. periodische Störungen auf der Übertragungsstrecke oder Glasfaserstrecke 20 heraus gefiltert werden können.

- Die Analyse der Amplituden der Stokes-Parameter 72, 74, 76 zur Auswertung der Intensität bzw. Stärke der Störungen.

## 2. Korrelation von Störungen

Die Erfinder haben jedoch noch weitere Anwendungsgebiete für die Erfindung gefunden, nämlich indem mehrere Polarimeter zeitlich korreliert werden, was wie folgt erläutert wird.

Fig. 5 zeigt einen Netzknoten 78, in welchem vier Übertragungssysteme WDM1 bis WDM4 zusammenlaufen. In dem Netzknoten 78, d.h. am jeweiligen signalabwärts gelegenen Ende der Übertragungssysteme WDM1 bis WDM4 wird eine Polarisationsmessung mit Polarimetern 81 bis 84, z. B. entsprechend dem Ausführungsbeispiel in Fig. 1 durchgeführt. Damit können die Polarisationsänderungen der aus unterschiedlichen Richtungen kommenden Übertragungssysteme WDM1 bis WDM4 gemessen werden. Die Polarimeter 80 bis 84 sind an eine gemeinsame Taktversorgung 86, z.B. das Taktnetz der synchronen digitalen Hierarchie (SDH) oder an einen gemeinsamen GPS-Takt angeschlossen. Mit Hilfe dieses Referenztaktes 86, der mit den Polarimetern 81 bis 84 verbunden ist, können den gemessenen zeitlichen Veränderungen der Polarisationszustände von unterschiedlichen Übertragungssystemen also Zeitpunkte zugeordnet werden. Dies kann als absoluter Zeitpunkt bzw. relativ zu den gemessenen Änderungen des Polarisationszustandes an den anderen Polarimetern geschehen. Damit können gleichzeitig auftretende, gleichartige Ereignisse zeitlich zueinander korreliert werden und damit gegebenenfalls als großflächige Störungen identifiziert werden.

Fig. 5 gibt zwei Beispiele für die Information, die aus dieser Korrelation der Polarisationsmesssignale gewonnen werden kann.

Die beiden unterschiedlichen, in der Darstellung linken WDM-Übertragungssysteme WDM1 und WDM2 werden in einem ersten Bereich A in einem gemeinsamen Kabel 88 geführt. In einem zweiten Bereich B verlaufen die beiden Übertragungssysteme WDM1 und WDM2 räumlich getrennt. Tritt nun eine Störung im Bereich der gemeinsamen Führung A auf, sind auch die von den Polarimetern 81 und 82 gemessenen Polarisationsänderungen zeitlich korreliert und werden als solche detektiert werden. Hierdurch kann festgestellt werden, dass die Störung in dem Bereich der gemeinsamen Führung A stattgefunden hat. Somit können durch häufig auftretende korrelierte Polarisationsänderungen aber auch unbekannte und unerwünschte gemeinsame Führungen in WDM-Systemen in gemeinsamen Kabeln identifiziert werden. Eine gemeinsame Führung kann auch darin bestehen, dass zwei Kabel innerhalb desselben Grabens verlaufen. Wenn andererseits keine Korrelation zwischen auftretenden Polarisationsänderungen zwischen dem System WDM1 und dem System WDM2 besteht, lässt sich daraus schließen, dass die zugehörigen Störungen in dem nicht gemeinsam geführten zweiten Bereich B stattgefunden haben.

D.h. man kann hiermit WDM-Systeme bewusst auf eine gemeinsame Führung testen, indem man mechanische Störungen, z.B. Schwingungen, mit vorbestimmten Eigenschaften, z.B. einer vorbestimmten Frequenz, auf die Kabel induziert und anhand des Vorliegens oder der Abwesenheit von Korrelationen der Polarisationsänderungen zwischen den Systemen WDM1 und WDM2 detektiert, ob die Systeme WDM1 und WDM2 an der Stelle, an der die Störung induziert wurde, gemeinsam geführt sind oder nicht.

Ist bekannt, dass zwei WDM-Systeme, hier WDM3 und WDM4, zwar nicht gemeinsam geführt sind, so kann aus der zeitlichen Korrelation der an den zur unterschiedlichen Polarimetern 83 und 84 gemessenen Polarisationsänderungen detektiert werden, ob die Störung durch ein großflächig auftretendes Ereignis, z.B. ein Erdbeben, verursacht wurde.

Es kann auch sein, dass, wenn die beiden WDM-Systeme WDM3 und WDM4 auf einer Brücke verlegt sind, die Störung durch eine Vibration der Brücke verursacht wurde. Auch dies lässt sich mittels der zeitlichen Korrelation der Polarisationszustands-Funktionen an den Polarimetern 83 und 84 bestimmen.

### 3. Ortung von Störungen

Übertragungssysteme und deren Netzelemente sind in der Regel bidirektional ausgelegt. WDM- und SDH-Systeme sind grundsätzlich bidirektional aufgebaut.

Fig. 6 zeigt ein Beispiel für ein bidirektionales WDM-System 301. Das WDM-Übertragungssystem 301 umfasst einen ersten Übertragungspfad für die Hinrichtung 302a und einen zweiten Übertragungspfad für die Rückrichtung 302b. Die Glasfaser 304a der Hinrichtung und die Glasfaser 304b der Rückrichtung liegen im Bereich 321 der Übertragungsstrecke 20 in ein und demselben Kabel. Dadurch breiten sich Störungen auf den Glasfasern 304a und 304b in beide Richtungen aus. Häufig werden sogar zwei benachbarte Glasfasern 304a und 304b für die Hin- und Rückrichtung des WDM-Systems 301 verwendet. Die optischen Verstärker 322a bis 325a der Hinrichtung und 322b bis 325b der Rückrichtung sind paarweise in jeweils einem gemeinsamen Netzelement 332 bis 335 integriert.

Am Ende der jeweiligen Richtung wird mittels jeweils eines Kopplers 356a, 356b das Polarisationsmesssignal ausgekoppelt und mittels jeweils eines Filters 357a, 357b an jeweils ein hiermit verbundenes Polarimeter 358a, 358b übertragen.

Somit wird Licht an einer ersten Stelle 312a des Übertragungspfads der Hinrichtung 302a und an einer ersten Stelle 312b des Übertragungspfads der Rückrichtung 302b eingekoppelt und das Licht an einer zweiten signalabwärts gelegenen Stelle 356a des Übertragungspfads der Hinrichtung 302a und an einer zweiten signalabwärts gelegenen Stelle 356b des Übertragungspfads der Rückrichtung 302b ausgekoppelt. Die Anordnung ist demzufolge spiegelsymmetrisch aufgebaut.

Nun wird die Ankunftszeit der Polarisationsänderung an den beiden Polarimetern 358a und 358b mit Hilfe der gemeinsamen Taktversorgung 386 bestimmt. Alternativ zur gemeinsamen Taktversorgung 386 kann die absolute Ankunftszeit der Polarisationsänderung auch mit Hilfe eines auf dem GPS-System basierenden Empfängers oder mit Hilfe der z.B. in Deutschland über Kurzwelle verteilten Zeit bestimmt werden.

D.h. wenn wie vorliegend beide Polarimeter über eine genügend genaue absolute Takt- oder Zeitinformation verfügen, kann der Ankunftszeitpunkt der Störung 310 absolut und relativ zueinander an den beiden Polarimetern 358a, 358b bestimmt werden.

Hierzu wird mittels einer zentralen Auswerteeinrichtung 342, welche mit den beiden Polarimetern 358a, 358b verbunden ist, die zeitliche Funktion der Polarisationszustände an den beiden Polarimetern verglichen, um die entsprechenden Signale einer bestimmten Störung zuordnen zu können. Anschließend wird die Differenz der Ankunftszeiten dieser Störung an den beiden Polarimetern 358a und 358b gemessen. Schließlich wird aus der Differenz der Ankunftszeiten bei bekannter Gesamtlänge der Messstrecke bzw. des Abstandes zwischen den beiden Polarimetern 358a und 358b anhand der Formel

$$s_1 = \frac{S - (t_2 - t_1)c_n}{2} \qquad\qquad (1)$$

der Ort der Störung berechnet.

Hierbei sind

$s_1$     die Wegstrecke zwischen dem Polarimeter 358a und der Störung,
$S$     der Abstand zwischen den beiden Polarimetern 358b und 358a,
$t_2$-$t_1$     die Differenz der Ankunftszeiten zwischen den beiden Polarimetern 358b und 358a,
$c_n$     die Ausbreitungsgeschwindigkeit des Lichts im Übertragungsmedium.

Der Abstand S zwischen den beiden Polarimetern und die Ausbreitungsgeschwindigkeit $c_n$ sind bekannte Konstanten. Die Genauigkeit der Ortsbestimmung der Störung hängt bei dieser Berechnung von der Genauigkeit der verfügbaren Zeitmessung ab. Die Taktgenauigkeit des SDH-Netzes bei Versorgung mit dem Zentraltakt liegt bei $10^{-11}$.

D.h. der Fehler der Ortsbestimmung Äs hängt von der Genauigkeit der Messung der Ankunftszeiten der Störung an den beiden Polarimetern ab. Diese wird von der Bandbreite der verwendeten Polarimeter und der Geschwindigkeit der Störung beeinflusst. Bei der Geschwindigkeit der Störung ist der Zeitraum Ät entscheidend, während dessen die Amplitude der Störung eindeutig aus dem Rauschen des Übertragungs- und Empfangssystems identifiziert werden kann, d.h. insbesondere die Steilheit der Anstiegsflanke des Polarisationsmesssignals. Es ergibt sich

$$\ddot{A}s \;=\; c_n \;*\; \ddot{A}t. \qquad\qquad (2)$$

In dem bezeichneten Beispiel liegt die Detektionszeit einer Störung bei etwa Ät = 100 μs, wie anhand der Fig. 4 ersichtlich ist. Dadurch ergibt sich eine Ortsauflösung in der Größenordnung von Äs = 20 km. Die Zeitauflösung des verwendeten Polarimeters A1000 ist hinreichend, so dass hiervon keine Verschlechterung der Ortsauflösung ausgeht.

Besonders vorteilhaft ist es, das erfindungsgemäße Verfahren großflächig in einer Transportplattform einzusetzen, wobei alle auflaufenden Informationen der Polarimeter als zusätzliche Plattform an das ohnehin vorhandene Netzmanagement-System an dessen bereits existierende Schnittstellen angeschlossen wird und so alle Störungsinformationen zentral gesammelt werden.

**Patentansprüche**

1.   Verfahren zur Ortung von externen Einflüssen (310) auf ein bidirektionales faseroptisches Übertragungssystem (301) mit je einem Übertragungspfad für die Hinrichtung und die Rückrichtung (302a, 302b), wobei
jeweils Licht an einer ersten signalabwärts gelegenen Stelle (356a) des Übertragungspfads der Hinrichtung (302a) und an einer zweiten signalabwärts gelegenen Stelle (356b) des Übertragungspfads der Rückrichtung (302b) ausgekoppelt wird, wobei das jeweils ausgekoppelte Licht zumindest einen gemeinsamen Abschnitt des Übertragungssystems in Hinrichtung bzw. Rückrichtung (302a, 302b) durchlaufen hat,
der Polarisationszustand (SOP) des ausgekoppelten Lichts für die Hinrichtung und die Rückrichtung (302a, 302b) jeweils zeitaufgelöst gemessen wird,
in Ansprechen auf eine zeitliche Änderung des Polarisationszustands für die Hinrichtung und die Rückrichtung (302a, 302b) eine externe Einwirkung (310) auf das Übertragungssystem detektiert wird und
in Ansprechen auf die Ankunftszeiten ($t_1$, $t_2$) der zeitlichen Änderung für die Hinrichtung und die Rückrichtung (302a, 302b) der Ort der Einwirkung (310) entlang des Übertragungswegs berechnet wird.

2.   Verfahren nach Anspruch 1, wobei der Polarisationszustand (SOP) des ausgekoppelten Lichts kontinuierlich gemessen wird und vorbestimmte Parameter, welche ein Maß für den Polarisationszustand sind, als Funktion der Zeit ermittelt werden.

3.   Verfahren nach Anspruch 1 oder 2, wobei die Stokes-Parameter des Polarisationszustands (Fig. 4) des ausgekoppelten Lichts ermittelt werden.

4.   Verfahren nach Anspruch 3, wobei eine Fourier-Analyse der Stokes-Parameter durchgeführt wird, um die enthaltenen Frequenzanteile zu ermitteln und eine Filterung nach vorbestimmten Frequenzanteilen durchgeführt wird.

5. Verfahren nach Anspruch 3, wobei die Amplituden der Stokes-Parameter gemessen werden und die Intensität der Störung anhand der Amplituden ermittelt wird.

6. Verfahren nach einem der vorstehenden Ansprüche, wobei das Übertragungssystem (301) ein installiertes WDM-System ist und die zur Nachrichtenübertragung verwendeten optischen Signale als das Licht zur Messung des Polarisationszustands (SOP) verwendet werden, dergestalt dass ein Teil der Leistung der zur Nachrichtenübertragung verwendeten optischen Signale jeweils an der signalabwärts gelegenen Stelle ausgekoppelt (36, 136, 156, 356a, 356b) wird und somit der Polarisationszustand der optischen Signale nach dem Durchlaufen des zumindest einen Teils der Übertragungsstrecke (20) gemessen wird.

7. Verfahren nach einem der vorstehenden Ansprüche, wobei ein separater Laser (262) an einer signalaufwärts gelegenen Stelle zur Lichteinkopplung verwendet wird und das Licht dieses Lasers (262) an der signalabwärts gelegenen Stelle (36, 136, 156, 356a, 356b) ausgekoppelt und zur Messung des Polarisationszustands (SOP) verwendet wird.

8. Verfahren nach Anspruch 7, wobei die Wellenlänge des Lasers im Verstärkerband des Übertragungssystems (301) liegt und der Laser im Dauerlichtbetrieb läuft.

9. Verfahren nach Anspruch 7 oder 8, wobei das Übertragungssystem (301) ein installiertes WDM-System ist, bei welchem mehrere Übertragungskanäle am Eingang der Übertragungsstrecke (20) gemultiplext (14, 314a, 314b) und am Ausgang der Übertragungsstrecke (20) gedemultiplext (34, 334a, 334b) werden und der Laser (262) am Eingang des Multiplexers (14, 314a, 314b) eingekoppelt wird.

10. Verfahren nach einem der vorstehenden Ansprüche, wobei das Übertragungssystem (1) ein installiertes WDM-System ist, bei welchem mehrere Übertragungskanäle am Eingang der Übertragungsstrecke (20) gemultiplext (14, 314a, 314b) und am Ende der Übertragungsstrecke (20) gedemultiplext (34, 334a, 334b) werden und wobei das Licht zur Messung des Polarisationszustandes (SOP) innerhalb der Übertragungsstrecke (20) zwischen Multiplexer (14, 314a, 314b) und Demultiplexer (34, 334a, 334b) ausgekoppelt und mittels eines optischen Filters (137, 157, 357a, 357b) gefiltert wird.

11. Verfahren nach Anspruch 10, wobei das Licht zur Messung des Polarisationszustands (SOP) am Ort eines optischen Verstärkers (22-26, 325a, 322b) in der Übertragungsstrecke (20) ausgekoppelt wird.

12. Verfahren nach einem der vorstehenden Ansprüche, wobei das Übertragungssystem (301) ein installiertes WDM-System ist, bei welchem mehrere Übertragungskanäle am Eingang der Übertragungsstrecke gemultiplext (14, 314a, 314b) und am Ausgang der Übertragungsstrecke gedemultiplext (34, 334a, 334b) werden und das Licht zur Messung des Polarisationszustands am Ausgang des Demultiplexers (34, 334a, 334b) ausgekoppelt wird.

13. Verfahren nach einem der vorstehenden Ansprüche, wobei aus mehreren Übertragungssystemen (WDM1-WDM4) jeweils Licht ausgekoppelt und jeweils mittels eines Polarimeters (81-84) der Polarisationszustand (SOP) des jeweiligen Lichts zeitaufgelöst gemessen wird, wobei die Polarimeter (81-84) mittels einer gemeinsamen Taktversorgung (86) synchronisiert sind und eine zeitliche Korrelation zwischen den Polarisationszuständen (SOP) an den Polarimetern ermittelt wird.

14. Verfahren nach einem der vorstehenden Ansprüche, wobei aus der Zeitdifferenz ($t_1$-$t_2$) der jeweiligen Ankunftszeit der Änderung des Polarisationszustands an den beiden Seiten der Übertragungsstrecke (20), der Länge der Messstrecken und der Übertragungsgeschwindigkeit ($c_n$) der optischen Faser (304a, 304b) der Ort der externen Einwirkung (310) entlang der Übertragungsstrecke (20) berechnet wird.

15. Optisches Übertragungssystem (1) mit zumindest einer faseroptischen Übertragungsstrecke (20), mit einem Sender (12) und einem Empfänger (32) zur Übermittlung von optischen Signalen über die optische Faser (19) und Mitteln zur Anwendung des Verfahrens nach einem der vorstehenden Ansprüche, umfassend:

   einen ersten Koppler (36, 136, 156) zum Auskoppeln von Licht aus dem Übertragungssystem (1) nach dem Durchlaufen zumindest eines Abschnitts der Übertragungsstrecke (20),
   eine mit dem ersten Koppler (36, 136, 156) verbundene erste Polarisations-Messeinrichtung (38, 138, 158, 358a) zur zeitaufgelösten Messung des Polarisationszustands (SOP) des ausgekoppelten Lichts mit einem ersten signalabwärts in Hinrichtung gelegenen Polarimeter, und

eine mit der ersten Polarisations-Messeinrichtung verbundene Auswerteeinrichtung (42, 142), welche Mittel zur automatischen Erkennung von zeitlichen Änderungen des gemessenen Polarisationszustands und Mittel zur Detektion von externen Einwirkungen (10) auf die Übertragungsstrecke in Ansprechen auf die zeitlichen Änderungen des gemessenen Polarisationszustands besitzt,

wobei das Übertragungssystem bidirektional ausgebildet ist und signalabwärts in Rückrichtung ein zweites Polarimeter (358b) umfasst, wobei die beiden Polarimeter zeitlich synchronisiert (386) sind und wobei eine Auswerteeinrichtung (342) umfasst ist, welche in Ansprechen auf die relative Ankunftszeit einer identifizierbaren schnellen Änderung des Polarisationszustands (SOP) an den beiden Polarimetern (358a, 358b) den Ort der externen Einwirkung (310) entlang der Übertragungsstrecke (20) berechnet.

16. Optisches Übertragungssystem (1) nach Anspruch 15, wobei das erste Polarimeter zur kontinuierlichen Messung mehrerer Komponenten des Polarisationszustandes ausgebildet ist.

17. Optisches Übertragungssystem (301) nach Anspruch 16, wobei das erste Polarimeter (38, 138, 358a) zur Ermittlung und Ausgabe der Stokes-Parameter (Fig. 4) des ausgekoppelten Lichts ausgebildet ist.

18. Optisches Übertragungssystem (301) nach Anspruch 17, wobei eine Fourier-Analyseeinrichtung zur Fourier-Transformation der Stokes-Komponenten und ein Filter zum Filtern von vorbestimmten Frequenzanteilen in den Fourier-Spektren umfasst ist.

19. Optisches Übertragungssystem (301) nach Anspruch 18, wobei eine Einrichtung zur Bestimmung der Amplituden der Stokes-Parameter umfasst ist.

20. Optisches Übertragungssystem (301) nach einem der vorstehenden Ansprüche 15-19, wobei das Übertragungssystem ein installiertes WDM-System ist und die zur Nachrichtenübertragung verwendeten optischen Signale als das Licht zur Messung des Polarisationszustands (SOP) verwendet werden, wobei ein Koppler (36, 136, 156, 356a) umfasst ist, welcher einen Teil der Leistung der zur Nachrichtenübertragung verwendeten optischen Signale an einer zweiten Stelle auskoppelt und somit der Polarisationszustand (SOP) der optischen Signale gemessen wird.

21. Optisches Übertragungssystem (301) nach einem der vorstehenden Ansprüche 15-20, wobei ein separater Laser (262) an einer ersten Stelle zur Lichteinkopplung umfasst ist und das Licht dieses Laser (262) an einer zweiten Stelle ausgekoppelt und zur Messung des Polarisationszustands (SOP) verwendet wird.

22. Optisches Übertragungssystem (301) nach Anspruch 21, wobei die Wellenlänge des Lasers (262) im Verstärkerband des Übertragungssystems (301) liegt und der Laser (262) ein Dauerlichtlaser (cw) ist.

23. Optisches Übertragungssystem (301) nach Anspruch 21 oder 22, wobei das Übertragungssystem ein installiertes WDM-System mit einem Multiplexer (14, 314a, 314b) am Eingang und einem Demultiplexer (34. 334a, 334b) am Ausgang der Übertragungsstrecke (20) zur gebündelten Signalübertragung über die Übertragungsstrecke ist und der Laser (262) mit einem Eingang des Multiplexers (14, 314a, 314b) verbunden ist.

24. Optisches Übertragungssystem (301) nach einem der vorstehenden Ansprüche 15-23, wobei das Übertragungssystem ein installiertes WDM-System mit einem Multiplexer (14, 314a, 314b) am Eingang und einem Demultiplexer (34, 334a, 334b) am Ausgang der Übertragungsstrecke (20) zur gebündelten Signalübertragung über die Übertragungsstrecke ist, wobei ein optischer Koppler (136, 156, 356a, 356b) zur Lichtauskopplung innerhalb der Übertragungsstrecke (20) zwischen dem Multiplexer (14, 314a, 314b) und dem Demultiplexer (34, 334a, 334b) vorgesehen ist und ein optisches Filter (137, 157, 357a, 357b) zwischen den Koppler (136, 156, 356a, 356b) und die Polarisations-Messeinrichtung (138, 158, 358a, 358b) geschaltet ist.

25. Optisches Übertragungssystem (301) nach Anspruch 24, wobei der optische Koppler (136, 156, 356a, 356b) am Ort eines optischen Verstärkers (22-26, 325a, 322b) in die Übertragungsstrecke (20) eingefügt ist.

26. Optisches Übertragungssystem (301) nach einem der vorstehenden Ansprüche 15-25, wobei das Übertragungssystem ein installiertes WDM-System mit einem Multiplexer (14) am Eingang und einem Demultiplexer (34) am Ausgang der Übertragungsstrecke (20) zur gebündelten Signalübertragung über die Übertragungsstrecke ist und die Polarisations-Messeinrichtung (38) über einen optischen Koppler (36) an einem Ausgang des Demultiplexers (34) angeschlossen ist.

27. Optisches Übertragungssystem (301) nach einem der vorstehenden Ansprüche 15-26, wobei das Übertragungssystem mehrere Übertragungsstrecken (WDM1-WDM4) umfasst und an jeder Übertragungsstrecke ein Polarimeter (81-84) angeschlossen ist, wobei die Polarimeter (81-84) an eine gemeinsame Taktversorgung (86) angeschlossen sind und die Polarisationszustände des jeweils an den Polarimetern gemessenen Lichts zeitlich korreliert werden.

28. Optisches Übertragungssystem (301) nach einem der vorstehenden Ansprüche 15-27, wobei die Auswerteeinrichtung (342) aus der Zeitdifferenz ($t_2$-$t_1$) der jeweiligen Ankunftszeit der Änderung des Polarisationszustands an den beiden Polarimetern (358a, 358b), der Länge der Messstrecke und der Übertragungsgeschwindigkeit ($c_n$) der optischen Faser (304a, 304b) den Ort der externen Einwirkung (310) entlang der Übertragungsstrecke (20) berechnet.

29. Optisches Übertragungssystem (301) nach einem der vorstehenden Ansprüche 15-28, wobei die Polarimeter (358a, 358b) mittels des Normaltakts des Übertragungssystems, eines GPS-Signals oder eines Radiosignal synchronisiert sind.

## Claims

1. Method for locating external influences (310) on a bidirectional fiber optic transmission system (301) having one transmission path each for the forward direction and the reverse direction (302a, 302b), wherein
   light is coupled out both at a first point (356a) of the transmission path in the forward direction (302a) located downstream in the signal direction, and at a second point (356b) of the transmission path in the reverse direction (302b) located downstream in the signal direction, wherein the light that is coupled out in each case has traversed at least one common section of the transmission system in the forward or reverse direction (302a, 302b),
   the state of polarization (SOP) of the light that is coupled out for the forward direction and reverse direction (302a, 302b) is measured in a time-resolved manner in each case,
   in response to a change over time in the state of polarization for the forward direction and reverse direction (302a, 302b), an external influence (310) on the transmission system is detected, and
   in response to the arrival times ($t_1$, $t_2$) of the changes over time for the forward direction and reverse direction (302a, 302b), the location of the influence (310) along the transmission path is calculated.

2. Method according to claim 1, wherein the state of polarization (SOP) of the light that is coupled out is measured continuously, and predetermined parameters which constitute a measure for the state of polarization are ascertained as a function of time.

3. Method according to claim 1 or 2, wherein the Stokes parameters of the state of polarization (Fig. 4) of the light that is coupled out are ascertained.

4. Method according to claim 3. wherein a Fourier analysis of the Stokes parameters is carried out in order to ascertain the frequency components contained, and a filtering by predetermined frequency components is carried out.

5. Method according to claim 3, wherein the amplitudes of the Stokes parameters are measured, and the intensity of the interference is ascertained on the basis of the amplitudes.

6. Method according to any one of the preceding claims, wherein the transmission system (301) is an installed WDM system and the optical signals used for message transmission are used as the light for measuring the state of polarization (SOP) in such a manner that a portion of the power of the optical signals used for message transmission is coupled out at each of the points located downstream in the signal direction (36, 136, 156, 356a, 356b) and the state of polarization of the optical signals is thus measured after traversing the at least one section of the transmission path (20).

7. Method according to any one of the preceding claims, wherein a separate laser (262) is used to couple light in at a point located upstream in the signal direction, and the light from this laser (262) is coupled out at the point located downstream in the signal direction (36, 136, 156, 356a, 356b) and used to measure the state of polarization (SOP).

8. Method according to claim 7, wherein the wavelength of the laser is located within the amplification band of the transmission system (301) and the laser is operated in continuous-wave mode.

9. Method according to claim 7 or claim 8, wherein the transmission system (301) is an installed WDM system in which multiple transmission channels are multiplexed (14, 314a, 314b) at the input of the transmission path (20) and are demultiplexed (34, 334a, 334b) at the output of the transmission path (20), and the laser (262) is coupled in at the input of the multiplexer (14, 314a, 314b),

10. Method according to any one of the preceding claims, wherein the transmission system (1) is an installed WDM system in which multiple transmission channels are multiplexed (14, 314a, 314b) at the input of the transmission path (20) and are demultiplexed (34, 334a, 334b) at the end of the transmission path (20), and wherein the light for measuring the state of polarization (SOP) is coupled out within the transmission path (20) between the multiplexer (14, 314a, 314b) and demultiplexer (34, 334a, 334b) and is filtered by means of an optical filter (137, 157, 357a, 357b).

11. Method according to claim 10, wherein the light for measuring the state of polarization (SOP) is coupled out at the location of an optical amplifier (22-26, 325a, 322b) within the transmission path (20).

12. Method according to any one of the preceding claims, wherein the transmission system (301) is an installed WDM system in which multiple transmission channels are multiplexed (14, 314a, 314b) at the input of the transmission path and are demultiplexed (34, 334a, 334b) at the output of the transmission path, and the light for measuring the state of polarization is coupled out at the output of the demultiplexer (34, 334a, 334b).

13. Method according to any one of the preceding claims, wherein light is coupled out of each of multiple transmission systems (WDM1-WDM4), and the state of polarization (SOP) of the applicable light is measured in a time-resolved manner in each case by means of a polarimeter (81-84), wherein the polarimeters (81-84) are synchronized by means of a common clock supply (86) and a time correlation between the states of polarization (SOP) at the polarimeters is ascertained.

14. Method according to any one of the preceding claims, wherein the location of the external influence (310) along the transmission path (20) is calculated from the time difference $(t_1-t_2)$ of the respective arrival times of the change in the states of polarization on the two sides of the transmission path (20), the length of the measurement paths, and the transmission speed $(c_n)$ of the optical fibers (304a, 304b).

15. Optical transmission system (1) having at least one fiber optic transmission path (20), having a transmitter (12) and a receiver (32) for transmitting optical signals through the optical fiber (19), and means for applying the method according to any one of the preceding claims, comprising:

a first coupler (36, 136, 156) for coupling light out of the transmission system (1) after at least one section of the transmission path (20) has been traversed,
a first polarization measurement device (38, 138, 158, 358a) connected to the first coupler (36, 136, 156) for time-resolved measurement of the state of polarization (SOP) of the light that is coupled out with a first polarimeter located downstream in the signal direction in the forward direction, and
an analysis device (42, 142) that is connected to the first polarization measurement device and has means for automatic recognition of changes in the measured state of polarization over time and means for detection of external influences (10) on the transmission path in response to the changes in the measured state of polarization over time,
wherein the transmission system is bidirectional in design and includes a second polarimeter (358b) located downstream in the reverse direction, wherein the two polarimeters are synchronized in time (386) and wherein an analysis device (342) is included that calculates the location of the external influence (310) along the transmission path (20) in response to the relative arrival time of an identifiable rapid change in the state of polarization (SOP) at the two polarimeters (358a, 358b).

16. Optical transmission system (1) according to claim 15, wherein the first polarimeter is designed for continuous measurement of multiple components of the state of polarization.

17. Optical transmission system (301) according to claim 16, wherein the first polarimeter (38, 138, 358a) is designed to ascertain and output the Stokes parameters (Fig. 4) of the light that is coupled out.

18. Optical transmission system (301) according to claim 17, wherein a Fourier analysis device for Fourier transformation of the Stokes components and a filter for filtering predetermined frequency components in the Fourier spectra are included.

19. Optical transmission system (301) according to claim 18, wherein a device for determining the amplitudes of the Stokes parameters is included.

20. Optical transmission system (301) according to any one of the preceding claims 15-19, wherein the transmission system is an installed WDM system and the optical signals used for message transmission are used as the light for measuring the state of polarization (SOP), wherein a coupler (36, 136, 156, 356a) is included that couples out a portion of the power of the optical signals used for message transmission at a second point, and the state of polarization (SOP) of the optical signals is thus measured.

21. Optical transmission system (301) according to any one of the preceding claims 15-20, wherein a separate laser (262) is included to couple light in at a first point, and the light from this laser (262) is coupled out at a second point and used to measure the state of polarization (SOP).

22. Optical transmission system (301) according to claim 21, wherein the wavelength of the laser (262) is located within the amplification band of the transmission system (301) and the laser (262) is a continuous-wave laser (cw).

23. Optical transmission system (301) according to claim 21 or 22, wherein the transmission system is an installed WDM system with a multiplexer (14, 314a, 314b) at the input and a demultiplexer (34, 334a, 334b) at the output of the transmission path (20) for bundled signal transmission through the transmission path, and the laser (262) is connected to an input of the multiplexer (14, 314a, 314b).

24. Optical transmission system (301) according to any one of the preceding claims 15-23, wherein the transmission system is an installed WDM system with a multiplexer (14, 314a, 314b) at the input and a demultiplexer (34, 334a, 334b) at the output of the transmission path (20) for bundled signal transmission through the transmission path, wherein an optical coupler (136, 156, 356a, 356b) is provided in the transmission path (20) between the multiplexer (14, 314a, 314b) and demultiplexer (34, 334a, 334b) for coupling light out, and an optical filter (137, 157, 357a, 357b) is connected between the coupler (136, 156, 356a, 356b) and the polarization measurement device (138, 158, 358a, 358b).

25. Optical transmission system (301) according to claim 24, wherein the optical coupler (136, 156, 356a, 356b) is inserted in the transmission path (20) at the location of an optical amplifier (22-26, 325a, 322b).

26. Optical transmission system (301) according to any one of the preceding claims 15-25, wherein the transmission system is an installed WDM system with a multiplexer (14) at the input and a demultiplexer (34) at the output of the transmission path (20) for bundled signal transmission through the transmission path and the polarization measurement device (38) is connected to an output of the demultiplexer (34) through an optical coupler (36).

27. Optical transmission system (301) according to any one of the preceding claims 15-26, wherein the transmission system includes multiple transmission paths (WDM1-WDM4), and a polarimeter (81-84) is connected to each transmission path, wherein the polarimeters (81-84) are connected to a common clock supply (86) and the states of polarization of the light measured at each of the polarimeters are correlated in time.

28. Optical transmission system (301) according to any one of the preceding claims 15-27, wherein the analysis device (342) calculates the location of the external influence (310) along the transmission path (20) from the time difference $(t_2-t_1)$ of the respective arrival times of the change in the states of polarization at the two polarimeters (358a, 358b), the length of the measurement path, and the transmission speed $(c_n)$ of the optical fiber (304a, 304b).

29. Optical transmission system (301) according to any one of the preceding claims 15-28, wherein the polarimeters (358a, 358b) are synchronized by means of the normal clock of the transmission system, a GPS signal, or a radio signal.

**Revendications**

1. Procédé de localisation d'influences extérieures (310) sur un système de transmission (301) à fibre optique bidirectionnel comprenant un trajet de transmission respectivement pour le sens aller et pour le sens retour (302a, 302b), de la lumière étant découplée respectivement à un premier endroit (356a), situé en aval du signal, du trajet de transmission du sens aller (302a), et à un deuxième endroit (356b), situé en aval du signal, du trajet de transmission du sens retour (302b), la lumière découplée ayant parcouru au moins une portion commune du système de transmission dans le sens aller ou dans le sens retour (302a, 302b),

l'état de polarisation (SOP) de la lumière découplée étant mesuré avec résolution temporelle respectivement pour le sens aller et pour le sens retour (302a, 302b),

une influence extérieure (310) sur le système de transmission étant détectée en réponse à un changement temporel de l'état de polarisation pour le sens aller et pour le sens retour (302a, 302b) et

l'endroit de l'influence (310) le long du trajet de transmission étant calculé en réponse aux temps d'arrivée ($t_1$, $t_2$) du changement temporel pour le sens aller et pour le sens retour (302a, 302b).

2. Procédé selon la revendication 1, l'état de polarisation (SOP) de la lumière découplée étant mesuré en continu et des paramètres prédéterminés servant de mesure pour l'état de polarisation étant déterminés comme fonction du temps.

3. Procédé selon l'une des revendications 1 ou 2, les paramètres de Stokes de l'état de polarisation (fig. 4) de la lumière découplée étant déterminés.

4. Procédé selon la revendication 3, une analyse de Fourier des paramètres de Stokes étant réalisée afin de déterminer les taux de fréquences contenus, et un filtrage selon des taux de fréquences prédéterminés étant réalisé.

5. Procédé selon la revendication 3, les amplitudes des paramètres de Stokes étant mesurées et l'intensité du brouillage étant déterminée à l'aide des amplitudes.

6. Procédé selon l'une des revendications précédentes, le système de transmission (301) étant un système WDM installé et les signaux optiques utilisés pour la transmission d'informations étant utilisés comme la lumière destinée à la mesure de l'état de polarisation (SOP) de manière telle qu'une partie de la puissance des signaux optiques utilisés pour la transmission des informations soit découplée respectivement à l'endroit situé en aval du signal (36, 136, 156, 356a, 356b) et que l'état de polarisation des signaux optiques soit mesuré après le parcours de la au moins une portion du trajet de transmission (20).

7. Procédé selon l'une des revendications précédentes, un laser (262) séparé étant utilisé, à un endroit situé en amont du signal, pour coupler la lumière, et la lumière du laser (262) étant découplée à l'endroit situé en aval du signal (36, 136, 156, 356a, 356b) et utilisée pour la mesure de l'état de polarisation (SOP).

8. Procédé selon la revendication 7, la longueur d'onde du laser se situant dans la bande d'amplification du système de transmission (301) et le laser fonctionnant en mode continu.

9. Procédé selon l'une des revendications 7 ou 8, le système de transmission (301) étant un Système WDM installé dans lequel plusieurs canaux de transmission sont multiplexés (14, 314a, 314b) à l'entrée du trajet de transmission (20) et démultiplexés (34, 334a, 334b) à la sortie du trajet de transmission (20) et le laser (262) étant couplé à l'entrée du multiplexeur (14, 314a, 314b).

10. Procédé selon l'une des revendications précédentes, le système de transmission (1) étant un système WDM installé dans lequel plusieurs canaux de transmission sont multiplexés (14, 314a, 314b) à l'entrée du trajet de transmission (20) et démultiplexés (34, 334a, 334b) à la fin du trajet de transmission (20) et dans lequel la lumière servant à la mesure de l'état de polarisation (SOP) est découplée à l'intérieur du trajet de transmission (20) entre le multiplexeur (14, 314a, 314b) et le démultiplexeur (34, 334a, 334b) et filtrée moyennant un filtre optique (137, 157, 357a, 357b).

11. Procédé selon la revendication 10, la lumière destinée à la mesure de l'état de polarisation (SOP) étant découplée à l'endroit d'un amplificateur optique (22-26, 325a, 322b) à l'intérieur du trajet de transmission (20).

12. Procédé selon l'une des revendications précédentes, le système de transmission (301) étant un système WDM installé dans lequel plusieurs canaux de transmission sont multiplexés (14, 314a, 314b) à l'entrée du trajet de transmission et démultiplexés (34, 334a, 334b) à la sortie du trajet de transmission et dans lequel la lumière destinée à la mesure de l'état de polarisation est découplée à la sortie du démultiplexeur (34, 334a, 334b).

13. Procédé selon l'une des revendications précédentes, de la lumière étant découplée respectivement de plusieurs systèmes de transmission (WDM1-WDM4) et l'état de polarisation (SOP) de la lumière respective étant mesurée à résolution temporelle moyennant un polarimètre (81-84), les polarimètres (81-84) étant synchronisés moyennant un générateur d'horloge (86) commun et une corrélation temporelle entre les états de polarisation (SOP) au niveau des polarimètres étant déterminée.

14. Procédé selon l'une des revendications précédentes, l'endroit de l'influence extérieure (310) le long du trajet de transmission (20) étant calculé à partir de la différence temporelle ($t_1$-$t_2$) du temps respectif d'arrivée du changement de l'état de polarisation des deux côtés du trajet de transmission (20), de la longueur des trajets mesurés et de la vitesse de transmission ($c_n$) de la fibre optique (304a, 304b).

15. Système de transmission optique (1) comportant au moins un trajet de transmission (20) à fibre optique, un émetteur (12) et un récepteur (32) pour la transmission de signaux optiques par l'intermédiaire de la fibre optique (19) et des moyens pour l'application du procédé selon l'une des revendications précédentes, comprenant :

un premier coupleur (36, 136, 156) pour découpler de la lumière du système de transmission (1) après le parcours d'une portion au moins du trajet de transmission (20),
un premier dispositif de mesure (38, 138, 158, 358a) de la polarisation relié au premier coupleur (36, 136, 156) pour la mesure à résolution temporelle de l'état de polarisation (SOP) de la lumière découplée moyennant un premier polarimètre situé en aval du signal dans le sens aller, et
un dispositif de lecture (42, 142) relié au premier dispositif de mesure de la polarisation comportant des moyens de détection automatique des changements temporels de l'état de polarisation mesuré et des moyens de détection d'influences extérieures (10) sur le trajet de transmission en réponse aux changements temporels de l'état de polarisation mesuré,
le système de transmission étant de type bidirectionnel et comprenant un deuxième polarimètre (358b) en aval du signal dans le sens retour, les deux polarimètres étant synchronisés temporellement (386) et un dispositif de lecture (342) étant compris qui, en réponse au temps d'arrivée relatif d'un changement rapide identifiable de l'état de polarisation (SOP) au niveau des deux polarimètres (358a, 358b), calcule l'endroit de l'influence extérieure (310) le long du trajet de transmission (20).

16. Système de transmission optique (1) selon la revendication 15, le premier polarimètre étant conçu pour mesurer en continu plusieurs composantes de l'état de polarisation.

17. Système de transmission optique (301) selon la revendication 16, le premier polarimètre (38, 138, 358a) étant conçu pour déterminer et éditer les paramètres de Stokes (fig. 4) de la lumière découplée.

18. Système de transmission optique (301) selon la revendication 17, un dispositif d'analyse de Fourier destiné à la transformation de Fourier des composantes de Stokes et un filtre destiné à filtrer des taux de fréquences prédéterminés dans les spectres de Fourier étant compris.

19. Système de transmission optique (301) selon la revendication 18, un dispositif de détermination des amplitudes des paramètres de Stokes étant compris.

20. Système de transmission optique (301) selon l'une des revendications précédentes 15 à 19, le système de transmission étant un système WDM installé et les signaux optiques utilisés pour la transmission d'informations étant utilisés comme la lumière pour la mesure de l'état de polarisation (SOP), un coupleur (36, 136, 156, 356a) étant compris qui découple, à un deuxième endroit, une partie de la puissance des signaux optiques utilisés pour la transmission d'informations de manière que l'état de polarisation (SOP) des signaux optiques soit mesuré.

21. Système de transmission optique (301) selon l'une des revendications précédentes 15 à 20, un laser (262) séparé étant compris à un premier endroit pour coupler la lumière et la lumière de ce laser (262) étant découplée à un deuxième endroit et utilisée pour la mesure de l'état de polarisation (SOP).

22. Système de transmission optique (301) selon la revendication 21, la longueur d'onde du laser (262) se situant dans la bande d'amplification du système de transmission (301) et le laser (262) étant un laser fonctionnant en mode continu (cw).

23. Système de transmission optique (301) selon l'une des revendications 21 ou 22, le système de transmission étant un système WDM installé comprenant un multiplexeur (14, 314a, 314b) à l'entrée et un démultiplexeur (34, 334a, 334b) à la sortie du trajet de transmission (20) pour la transmission des signaux en faisceau par l'intermédiaire du trajet de transmission et le laser (262) étant relié à une entrée du multiplexeur (14, 314a, 314b).

**24.** Système de transmission optique (301) selon l'une des revendications précédentes 15 à 23, le système de transmission étant un système WDM installé comportant un multiplexeur (14, 314a, 314b) à l'entrée et un démultiplexeur (34, 334a, 334b) à la sortie du trajet de transmission (20) pour la transmission des signaux en faisceau par l'intermédiaire du trajet de transmission, un coupleur optique (136, 156, 356a, 356b) destiné à découpler la lumière à l'intérieur du trajet de transmission (20) étant prévu entre le multiplexeur (14, 314a, 314b) et le démultiplexeur (34, 334a, 334b) et un filtre optique (137, 157, 357a, 357b) étant monté entre le coupleur (136, 156, 356a, 356b) et le dispositif de mesure de la polarisation (138, 158, 358a, 358b).

**25.** Système de transmission optique (301) selon la revendication 24, le coupleur optique (136, 156, 356a, 356b) étant intégré dans le trajet de transmission (20) à l'endroit d'un amplificateur optique (22-26, 325a, 322b).

**26.** Système de transmission optique (301) selon l'une des revendications précédentes 15 à 25, le système de transmission étant un système WDM installé comportant un multiplexeur (14) à l'entrée et un démultiplexeur (34) à la sortie du trajet de transmission (20) pour la transmission des signaux en faisceau par l'intermédiaire du trajet de transmission et le dispositif de mesure de la polarisation (38) étant raccordé à une sortie du démultiplexeur (34) par l'intermédiaire d'un coupleur optique (36).

**27.** Système de transmission optique (301) selon l'une des revendications précédentes 15 à 26, le système de transmission comprenant plusieurs trajets de transmission (WDM1-WDM4) et un polarimètre (81-84) étant raccordé à chaque trajet de transmission, les polarimètres (81-84) étant raccordés à un générateur d'horloge (86) commun et les états de polarisation de la lumière respectivement mesurée au niveau des polarimètres étant corrélés temporellement.

**28.** Système de transmission optique (301) selon l'une des revendications précédentes 15 à 27, le dispositif de lecture (342) calculant l'endroit de l'influence extérieure (310) le long du trajet de transmission (20) à partir de la différence temporelle $(t_2-t_1)$ du temps respectif d'arrivée du changement de l'état de polarisation au niveau des deux polarimètres (358a, 358b), de la longueur du trajet mesuré et de la vitesse de transmission $(c_n)$ de la fibre optique (304a, 304b).

**29.** Système de transmission optique (301) selon l'une des revendications précédentes 15 à 28, les polarimètres (358a, 358b) étant synchronisés moyennant l'horloge normale du système de transmission, un signal GPS ou un signal radio.

Fig. 1

Fig. 2

EP 1 796 295 B1

Fig. 3

(2-4)

EP 1 796 295 B1

Fig. 4

Fig. 5

Fig. 6

EP 1 796 295 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5485296 A

- CA 2229219 A1

**In der Beschreibung aufgeführte Nicht-Patentliteratur**

- **Joachim Wuttke et al.** Polarization Oscillations in Aerial Fiber Caused by Wind and Power-Line Current. *IEEE PHOTONICS TECHNOLOGY LETTERS,* 06. Juni 2003, vol. 15